(19) **Europäisches Patentamt European Patent Office Office européen des brevets**

(11) **EP 4 596 088 A1**

(12) **EUROPEAN PATENT APPLICATION**
published in accordance with Art. 153(4) EPC

(43) Date of publication:
06.08.2025 Bulletin 2025/32

(21) Application number: 23872230.0

(22) Date of filing: 25.09.2023

(51) International Patent Classification (IPC):
B01D 61/04 (2006.01)     B01D 61/12 (2006.01)
B01D 61/22 (2006.01)     B01D 61/58 (2006.01)
B01D 63/02 (2006.01)     B01D 65/02 (2006.01)
B01D 69/00 (2006.01)     B01D 69/02 (2006.01)
B01D 69/08 (2006.01)     B01D 71/34 (2006.01)
C02F 1/44 (2023.01)

(52) Cooperative Patent Classification (CPC):
B01D 61/04; B01D 61/12; B01D 61/22;
B01D 61/58; B01D 63/02; B01D 65/02;
B01D 69/00; B01D 69/02; B01D 69/08;
B01D 71/34; C02F 1/44

(86) International application number:
PCT/JP2023/034640

(87) International publication number:
WO 2024/071005 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.09.2022  JP 2022154563
02.12.2022  JP 2022193239
07.03.2023  JP 2023034338

(71) Applicant: Toray Industries, Inc.
Tokyo 103-8666 (JP)

(72) Inventors:
• TACHIBANA, Takashi
  Otsu-shi
  Shiga 520-8558 (JP)
• SHIMURA, Shun
  Otsu-shi
  Shiga 520-8558 (JP)
• HANAKAWA, Masayuki
  Tokyo 103-8666 (JP)
• HANADA, Shigehisa
  Otsu-shi
  Shiga 520-8558 (JP)

(74) Representative: Hoefer & Partner Patentanwälte
mbB
Pilgersheimer Straße 20
81543 München (DE)

(54) **POROUS MEMBRANE AND DESALINATION METHOD**

(57) When a conventional porous membrane is used for a contaminative liquid to be filtered, the surface of the membrane is blocked due to turbid matter separated by filtration and, as a result, membrane clogging occurs, so that the permeation performance tends to deteriorate. Provided is a porous membrane that has high water permeability and excellent contamination resistance, and is capable of maintaining high filtrate permeability for a contaminative liquid to be filtered. The porous membrane contains a polyvinylidene fluoride resin, in which, given that one surface is a surface A and another surface is a surface B, a ratio (ratio of $H_\alpha/H_\beta$) between an $\alpha$-type crystal ($H_\alpha$) and a $\beta$-type crystal ($H_\beta$) in a crystalline portion of the polyvinylidene fluoride resin measured by an attenuated total reflection (ATR) method at the surface A is 0 or more and 0.5 or less, a pure water permeability is 0.25 to 1.2 $m^3/m^2/h/50$ kPa, and an average value of a surface pore diameter of a surface pore of the surface A of the porous membrane is 5.0 nm or more and 12.0 nm or less.

【FIG. 1】

**Description**

TECHNICAL FIELD

The present invention relates to a porous membrane used in the water treatment fields, the pharmaceutical production fields, the food industry fields, the fermentation fields, and the like.

BACKGROUND ART

In recent years, porous membranes such as microfiltration membranes and ultrafiltration membranes are used in various fields such as water treatment fields such as water purification and wastewater treatment, medical fields such as blood purification, and food industry fields. Recently, there has been a demand for a porous membrane that can efficiently filter a contaminative liquid to be filtered that has been considered to be difficult to filter, and has high resistance to contamination. The contaminative liquid to be filtered is characterized in that the liquid to be filtered contains more contaminants than usual, and the contaminants often contain organic substances. Examples of the organic substances generally include proteins, polysaccharides, and humic acid.

However, when the above-described contaminative liquid to be filtered is filtered, the porous membrane is clogged with contaminants contained in a large amount in the liquid to be filtered, and as a result, there is the problem that the filtration flux of the porous membrane decreases. In particular, in the case of a contaminative liquid to be filtered containing a large amount of organic substances, the adsorption of the organic substances to the porous membrane or the like by the interaction between the porous membrane and the organic substances serves as a starting point, and pores of the porous membrane are likely to be blocked. Furthermore, when the porous membrane is blocked and the number of pores decreases, a high pressure is required at the time of filtration, and the contaminant components are pressed against the surface of the porous membrane at a high pressure, so that adsorption more easily occurs. In order to suppress a decrease in filtration flux, it is important to reduce adsorption of organic substances to the porous membrane.

Here, as one of the methods for eliminating the adsorption of the organic substances and recovering the filtration flux, it is used as effective means to decompose and remove the organic substances or the like accumulated in the porous membrane using a chemical, for example, an oxidizing agent such as sodium hypochlorite or an alkali such as sodium hydroxide. However, since such a chemical can not only decompose the accumulated organic substances but also decompose polymers constituting the membrane, if chemical washing is continuously performed, membrane pores become coarse, and it becomes difficult to maintain the separation performance and mechanical strength of the membrane for a long period of time.

On the other hand, Patent Documents 1 and 2 disclose methods for increasing the ratio of $\alpha$-type crystals, which are stable crystals, in a polyvinylidene fluoride resin (hereinafter also referred to as "PVDF resin"). It is disclosed that when there are many stable crystals, chemical resistance is improved, and washing strength is increased.

PRIOR ART DOCUMENT

PATENT DOCUMENTS

Patent Document 1: Japanese Patent Laid-open Publication No. 2015-73916
Patent Document 2: Japanese Patent Laid-open Publication No. 2021-176629
Patent Document 3: Japanese Patent Laid-open Publication No. 2017-29934

SUMMARY OF THE INVENTION

PROBLEMS TO BE SOLVED BY THE INVENTION

However, the $\alpha$-type crystals in the porous membranes of the polyvinylidene fluoride resin of Patent Documents 1 and 2 have a TGTG' (T: trans, G: gauche) conformation. Since the $\alpha$-type crystals have a twisted structure, the dipole moments are arranged in alternating directions, and there is no polarity. Therefore, interaction with water molecules having a polarity is weak, and conversely, interaction with an organic substance is strong due to hydrophobic interaction. That is, the porous membrane made of the $\alpha$-type crystals of the polyvinylidene fluoride resin is likely to be clogged because organic substances are likely to be adsorbed. Therefore, it is necessary to clean the porous membrane with a large amount of chemicals. Although Patent Documents 1 and 2 improve the chemical resistance of the porous membranes, chemicals are expensive and may adversely affect a module member including the porous membrane or a process different from the porous membrane. For example, an adhesive for bonding the porous membrane is deteriorated, and as a result, the life of the porous membrane module is shortened, or when another separation membrane having relatively low chemical resistance is used in the subsequent stage of the porous membrane, the separation membrane in the subsequent stage may be deteriorated.

Patent Documents 2 and 3 disclose porous membranes containing not only $\alpha$-type crystals but also $\beta$-type crystals that are a relatively metastable phase. The $\beta$-type crystals have a planar zigzag conformation of TTTT, dipole moments are arranged in the same direction, the film surface has many electron donating components, and the $\beta$-type crystals are considered to have a polarity. For example, Patent Document 2 discloses a membrane in which the proportion of absorbance of infrared rays derived from $\alpha$-type crystals is 32.5% in the infrared absorbance derived from $\alpha$-type crystals and $\beta$-type crystals. That is, a membrane in which the ratio ($H_\alpha/H_\beta$) between $\alpha$-type crystals ($H_\alpha$) and $\beta$-type crystals ($H_\beta$) is 0.38 is disclosed. Patent Document 3 discloses a membrane in which the existence ratio of the $\alpha$ crystal structure to the $\beta$ crystal structure is 0.11. Therefore, these membranes strongly interact with water molecules also having a polarity, and conversely, organic substances are hardly adsorbed.

However, according to findings by the present inventors, in the method for producing a porous membrane of Patent Document 2, the phase separation rate is relatively high during membrane formation, and a porous membrane having a large pore diameter is likely to be formed. The number of pores was not sufficient because the pore diameter was large. In such a porous membrane, the contaminant components easily enter the porous membrane and cause clogging, and a desired filtration amount cannot be obtained. Although it is described that a membrane-forming solution contains a polyvinylidene fluoride resin as a polymer and a mixture of a plurality of good solvents as a solvent, the self-diffusion coefficient of the polymer is not focused, and the good solvents do not include a hydrogen bonding solvent described later. In addition, in the production method as disclosed in Patent Document 3, the self-diffusion coefficient of the polymer is not also focused, the content of the polymer in the membrane-forming solution is as large as 30 wt%, the number of pores of the porous membrane to be formed is small, and the pure water permeability tends to be low. Such a porous membrane requires a high pressure at the time of filtration, and contaminant components are pressed against the membrane surface at a high pressure, so that adsorption and clogging of the porous membrane are promoted, and a sufficient permeate cannot be obtained in filtration of a liquid to be filtered containing a large amount of contaminant components.

A problem to be solved by the present invention is to obtain a porous membrane capable of maintaining high filtrate permeability even for a liquid to be filtered that has been considered to be difficult to filter because the porous membrane is significantly contaminated with the contaminative liquid to be filtered as described above. In the prior art, as in Patent Document 1, a porous membrane containing a large amount of $\alpha$-type crystals with emphasis on chemical resistance has been common. As described above, in Patent Document 3, since the polymer concentration in the membrane-forming solution is high, the phase separation rate tends to be relatively slow, and a porous membrane containing a large amount of $\beta$-type crystals, which are a metastable phase, is easily formed, while the number of pores of the porous membrane is small, and the pure water permeability tends to be low. Even when the polymer concentration in the membrane-forming solution is low as in Patent Document 2, it has been easy to form a porous membrane containing a large amount of $\beta$-type crystals by devising using a mixed solvent, but since the phase separation rate is not sufficiently slow, a porous membrane having a large pore diameter tends to be formed. That is, it has been difficult to form a porous membrane that has three features: low adsorption achieved by containing a large amount of $\beta$-type crystals, high pure water permeability due to an increase in the number of surface pores and securing of channels, and a relatively small surface pore diameter.

An object of the present invention is to provide a porous membrane that contains a large amount of $\beta$-type crystals and has excellent contamination resistance, and that has high pure water permeability to reduce adsorption even with a contaminative liquid to be filtered, to prevent intrusion of contaminant components into the porous membrane due to a relatively small surface pore diameter, and to secure a high filtration flux over a long period of time.

SOLUTIONS TO THE PROBLEMS

To solve the problems described above, the present invention provides a porous membrane having the following configurations.

(1) A porous membrane containing a polyvinylidene fluoride resin, in which, given that one surface is a surface A and another surface is a surface B, a ratio (ratio of $H_\alpha/H_\beta$) between an $\alpha$-type crystal ($H_\alpha$) and a $\beta$-type crystal ($H_\beta$) in a crystalline portion of the polyvinylidene fluoride resin measured by an attenuated total reflection (ATR) method at the surface A is 0 or more and 0.50 or less, a pure water permeability of the porous membrane is 0.25 $m^3/m^2/h/50$ kPa or more and 1.2 $m^3/m^2/h/50$ kPa or less, and an average value of a surface pore diameter of a surface pore of the surface A of the porous membrane is 5.0 nm or more and 12.0 nm or less.
(2) The porous membrane according to (1), in which the vinylidene fluoride resin has a degree of crystallinity of 30% or more at the surface A of the porous membrane.

(3) The porous membrane according to (1) or (2), having a removal rate of dextran of 40,000 Da of 45% or more and 80% or less.

(4) The porous membrane according to any one of (1) to (3), in which a value X obtained by dividing a number of the surface pores [pores/$\mu m^2$] at the surface A of the porous membrane by the average value [nm] of the surface pore diameter is 30 pores/$\mu m^2$/nm or more and 100 pores/$\mu m^2$/nm or less.

(5) The porous membrane according to any one of (1) to (4), in which a standard deviation of the surface pore diameter at the surface A of the porous membrane is 1.0 nm or more and 5.0 nm or less.

(6) The porous membrane according to any one of (1) to (5), in which a surface portion from the surface A to a thickness of 10 $\mu m$ of the porous membrane is denser than an inner portion.

(7) A liquid filtration method using the porous membrane according to any one of (1) to (6).

(8) A membrane filtration apparatus including the porous membrane according to any one of (1) to (6).

(9) A fresh water generation method including: a pretreatment step of pretreating water to be treated to provide water to be fed to a reverse osmosis membrane; and a reverse osmosis membrane treatment step of filtering the water to be fed to a reverse osmosis membrane with a reverse osmosis membrane to provide permeate water, in which the water to be treated is water to be treated having a biopolymer concentration of 100 $\mu g$ C/L or more, the water to be fed to a reverse osmosis membrane having a biopolymer concentration reduced to 75 $\mu g$ C/L or less by the pretreatment is supplied to the reverse osmosis membrane, the pretreatment step includes an ultrafiltration membrane treatment section including an ultrafiltration membrane, and the ultrafiltration membrane is the porous membrane according to any one of (1) to (6).

(10) The fresh water generation method according to (9), in which a number of surface pores at the surface A of the porous membrane is 200 pores/$\mu m^2$ or more and 2,000 pores/$\mu m^2$ or less.

(11) The fresh water generation method according to (9) or (10), in which in the ultrafiltration membrane treatment of the pretreatment step, the water to be treated does not contain a flocculant.

EFFECTS OF THE INVENTION

With the present invention, it is possible to obtain a porous membrane having a high proportion of $\beta$-type crystals to which organic substances are less likely to adhere, a small surface pore diameter, and a sufficiently large number of pores. A porous membrane that has high water permeability and excellent contamination resistance, and is capable of maintaining high filtrate permeability for a contaminative liquid to be filtered for a long period of time can thus be provided.

BRIEF DESCRIPTION OF THE DRAWINGS

Fig. 1 schematically shows a filtration situation of a porous membrane of the present invention.
Fig. 2 schematically shows a filtration situation using a conventional porous membrane.
Fig. 3 schematically shows a filtration situation using a conventional porous membrane.
Fig. 4 schematically shows a process of forming the porous membrane of the present invention.
Fig. 5 is an electron micrograph showing a surface (part) of a porous membrane of one embodiment of the present invention.
Fig. 6 is a schematic view of an example of a fresh water generation method of the present invention.

EMBODIMENT OF THE INVENTION

Hereinafter, an embodiment of the present invention will be described in detail with reference to the drawings, but the present invention is not limited thereto at all. In the present specification, "mass" and "weight" are synonymous. A contaminative liquid to be filtered is characterized in that the liquid to be filtered contains more contaminants than usual, and the contaminants often contain organic substances and the like to be removed. The organic substances generally include many proteins, polysaccharides, humic acid, and the like.

The contamination related to "contamination resistance" of the present invention means that the porous membrane is clogged with the organic substances contained in the liquid to be filtered in a filtration step. When clogging of the porous membrane with the organic substances progresses, the filtration resistance increases, and the amount of liquid that can permeate the porous membrane decreases.

In general, a porous membrane containing $\alpha$-type crystals is likely to adsorb the organic substances, and in order to eliminate this, a method of decomposing and removing accumulated organic substances or the like using a large amount of chemical is used as effective means. However, such a chemical not only decomposes the accumulated organic substances but also decomposes a polymer constituting the membrane, and may adversely affect a module member including the porous membrane or a process different from the porous membrane. Therefore, a porous membrane containing β-type crystals having excellent contamination resistance is promising, but there was no porous membrane containing β-type crystals and having high water permeability. In the present invention, a membrane containing β-type crystals further has pure water permeability, so that adsorption in a contaminative liquid to be filtered can be reduced, and a high filtration flux can be secured. The porous membrane having improved contamination resistance according to the present invention will be described below.

<Porous Membrane>

The porous membrane according to the embodiment of the present invention is a porous membrane containing a polyvinylidene fluoride resin and having a surface A and a surface B, in which it is required that a ratio (ratio $H_\alpha/H_\beta$) between an α-type crystal ($H_\alpha$) and a β-type crystal ($H_\beta$) in a crystalline portion of the polyvinylidene fluoride resin in an IR spectrum measured by an attenuated total reflection (ATR) method of the surface A is 0 or more and 0.5 or less, and a pure water permeability is 0.25 m$^3$/m$^2$/h/50 kPa or more and 1.2 m$^3$/m$^2$/h/50 kPa or less. Note that a ratio of $H_\alpha/H_\beta$ of 0 indicates that the proportion of the β-type crystals ($H_\beta$) is 100%.

The ratio ($H_\alpha/H_\beta$) between the α-type crystals ($H_\alpha$) and the β-type crystals ($H_\beta$) in the crystalline portion of the polyvinylidene fluoride resin is required to be 0 or more and 0.50 or less. Here, as the crystal structure of the polyvinylidene fluoride resin, three structures of an α type, a β type, and a γ type that exists in an extremely small amount are known. Among them, attention was paid to the α type and the β type, which are generally known to be formed more than the γ type. The β-type crystals have a planar zigzag conformation of TTTT, dipole moments are arranged in the same direction, the film surface has many electron donating components, and the β-type crystals are considered to have a polarity. Therefore, interaction with water molecules also having a polarity is strong, and conversely, organic substances are hardly adsorbed. When the ratio $H_\alpha/H_\beta$ is 0 or more and 0.50 or less, excellent contamination resistance to organic substances is exhibited. The ratio (ratio of $H_\alpha/H_\beta$) between the α-type crystals ($H_\alpha$) and the β-type crystals ($H_\beta$) in the crystalline portion of the polyvinylidene fluoride resin can be calculated by Formula (1) below and is more preferably 0.25 or more and 0.40 or less, still more preferably 0.30 or more and 0.40 or less. The smaller the ratio of $H_\alpha/H_\beta$ is, the larger the amount of the β-type crystals is, which is preferable.

$$\text{Ratio of } \alpha\text{-}/\beta\text{-type crystals} = H_\alpha/H_\beta \quad \cdots \quad \text{Formula (1)}.$$

The porous membrane of the present invention is characterized in that there are many β-type crystals ($H_\beta$) in the crystalline portion of the polyvinylidene fluoride resin. In the prior art, in order to obtain the β-type crystals ($H_\beta$), it has been necessary to increase the concentration of the PVDF polymer in the film formation process. When the PVDF polymer concentration is high, the density of the polymer in the porous membrane to be produced increases, and the voids and the number of pores are reduced. There has been an attempt to obtain β-type crystals at a reduced PVDF polymer concentration in the film formation process, but since the concentration is low, large pores are easily formed, and a sparse porous membrane having a small number of pores is formed. On the other hand, in the porous membrane of the present invention, a large number of fine pores can be formed even when the concentration of the PVDF polymer is low by controlling the phase separation rate between the polymer and the solvent. In the phase separation process between the polymer and the solvent, by setting the phase separation rate to be relatively slow, it is possible to reduce the pore diameter and to form a large number of pores. The self-diffusion coefficient of the polymer can be used as an index of the phase separation rate, and by optimizing the concentration of the polymer and the solvent and temperature of the coagulation bath, a porous membrane having a small surface pore diameter and a large number of pores while having a large amount of β-type crystals and excellent contamination resistance is obtained.

The porous membrane of the present invention is mainly composed of a crystalline polymer resin containing polyvinylidene fluoride, and the degree of crystallinity thereof is not limited as long as the polymer resin constituting the porous membrane contains crystals within 50 μm from the surface A of the porous membrane, but the degree of crystallinity of PVDF is more preferably 30% or more. When the degree of crystallinity is 30% or more, deformation of pores is easily suppressed when turbid matter collides with the porous membrane, and the turbid matter easily rebounds from the membrane surface, which is preferable. The degree of crystallinity is more preferably 35% or more, still more preferably 40% or more for suppressing deformation of the pores and improving rebound of the turbid matter. However, when the degree of crystallinity is 80% or more, the flexibility of the porous membrane is lost, and the porous membrane is easily broken in an operation such as a cross-flow operation, and therefore the degree of crystallinity is preferably 80% or less. When the ratio of $H_\alpha/H_\beta$ is small and the degree of crystallinity is 30% or more, interaction with water molecules having a polarity is strong, and an effect of hardly adsorbing organic substances is easily obtained. In the case of determining the degree of crystallinity of the porous membrane, the degree of crystallinity can be calculated from the measurement result with a differential scanning calorimeter (hereinafter referred to as DSC). A slice within 50 μm from the outer surface of the porous membrane used for measuring the degree of crystallinity is collected with a commercially available freezing microtome. With the microtome, after moving the porous membrane at a constant moving distance, a blade can be brought into contact with the porous membrane to cut the porous membrane. The blade is installed in a direction parallel to the surface of the porous membrane. First, the porous membrane is brought close to the blade in increments of the moving distance of 5 $\mu$m, and the porous membrane is cut once. Thereafter, the movement distance is set to 40 $\mu$m, and cutting is further performed once, so that a portion up to 40 $\mu$m to 45 $\mu$m in thickness from the surface A can be collected.

When the pure water permeability is 0.25 $m^3/m^2/h/50$ kPa or more and 1.2 $m^3/m^2/h/50$ kPa or less, it is possible to perform the filtration operation at a relatively low pressure even for a contaminative liquid to be filtered, and contaminant components are not pressed against the membrane surface at a high pressure, so that the adsorption and clogging of the porous membrane are suppressed, and a sufficient permeate can be obtained even in the filtration of the liquid to be filtered containing a large amount of contaminant components. The pure water permeability is more preferably 0.30 $m^3/m^2/h/50$ kPa or more and 1.2 $m^3/m^2/h/50$ kPa or less, still more preferably 0.40 $m^3/m^2/h/50$ kPa or more and 1.2 $m^3/m^2/h/50$ kPa or less.

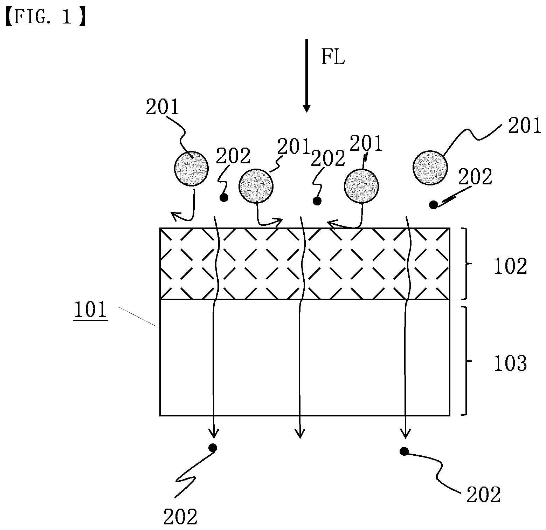

Fig. 1 schematically shows filtration of a liquid to be filtered that is difficult to filter with the porous membrane of the present invention. Fig. 1 is a schematic conceptual diagram showing a part of a section of the porous membrane. In Fig. 1, solid lines drawn in a surface portion 102 schematically show a network structure. A filtration direction FL is a direction from the surface portion 102 toward an inner portion 103. The organic substances in the liquid to be filtered often contain a coarse contaminant component 201 and a fine contaminant component 202. Since the porous membrane contains $\beta$-type crystals, the porous membrane has high polarity and suppresses adsorption of the coarse contaminant component 201 and the fine contaminant component 202. Further, since pure water permeability is high, the fine contaminant component 202 can pass through the porous membrane at a relatively low pressure. At this time, since the fine contaminant component 202 is not strongly pressed against the pores in the porous membrane, adsorption of the fine contaminant component 202 to the porous membrane and clogging of the porous membrane with the fine contaminant component 202 are easily suppressed, and high filtrate permeability can be maintained. A porous membrane 101 includes the surface portion 102 and the inner portion 103. Since the surface portion 102 has a denser structure than the inner portion 103, the contaminant components are less likely to enter the inner portion of the porous membrane, so that excellent contamination resistance is easily exhibited, which is preferable. When micropores of the surface portion 102 are dense, the coarse contaminant component 201 cannot enter the porous membrane and does not block the surface portion 102 of the porous membrane, and the porous membrane is less likely to be contaminated, which is preferable.

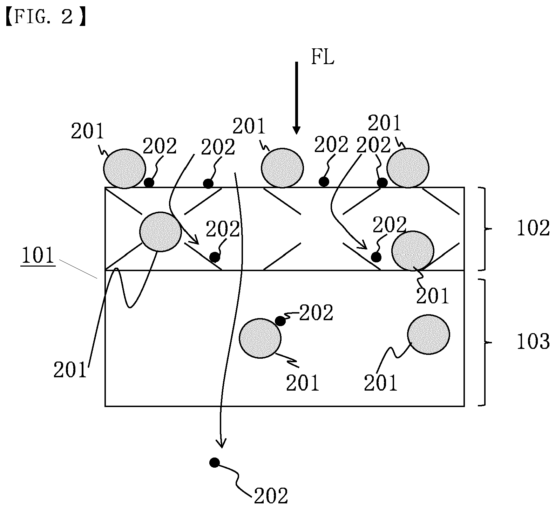

Fig. 2 is a schematic view when a liquid to be filtered that is difficult to filter is filtered through a porous membrane having large pores containing a large amount of $\alpha$-type crystals, which has been known so far. Since the porous membrane contains a large amount of $\alpha$-type crystals, the polarity of the porous membrane is low, and the porous membrane easily adsorbs the coarse contaminant component 201 and the fine contaminant component 202, which are organic substances, due to hydrophobic-hydrophobic interaction. In addition, since the pore diameter is coarse, the coarse contaminant component 201 easily enters the inner portion of the porous membrane and causes clogging, and since the number of pores is small, the filtrate permeability is low.

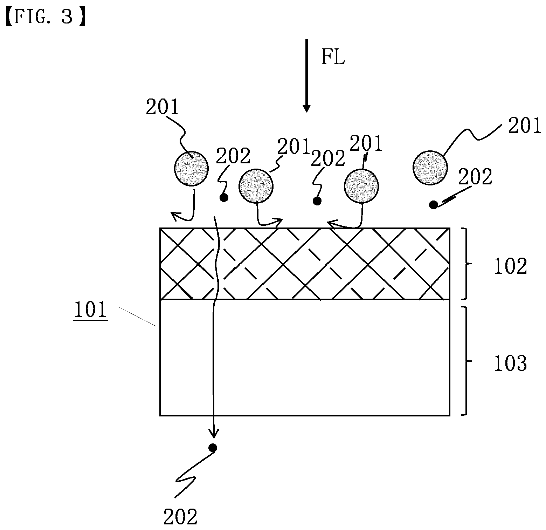

Fig. 3 is a schematic view when a liquid to be filtered that is difficult to filter is filtered through a porous membrane having low pure water permeability while containing a relatively large amount of $\beta$-type crystals, which has been known so far. Such a porous membrane often has a small number of pores and has low pure water permeability. Since the porous membrane contains a large amount of $\beta$-type crystals, adsorption of the coarse contaminant component 201 and the fine contaminant component 202 is relatively small. However, since the pure water permeability is low, a high pressure is required for the liquid to be filtered containing the fine contaminant component 202 to pass through the porous membrane. Therefore, the fine contaminant component 202 is strongly pressed against the pores in the porous membrane, and adsorption into the porous membrane gradually occurs. Therefore, the filtrate permeability tends to be low.

Since the porous membrane of the present invention further has a removal rate of dextran with a weight-average molecular weight of 40,000 Da of 45% or more and 80% or less, the porous membrane is likely to prevent coarse contaminants and objects to be removed in the liquid to be filtered from entering the membrane and exhibit excellent contamination resistance. The dextran removal rate is more preferably 50% or more and 80% or less. The dextran removal rate can be calculated from the following Formula (2) by performing filtration using the porous membrane at a crossflow linear velocity of 1.0 m/sec and a transmembrane pressure difference of 10 kPa using an aqueous dextran solution prepared to have a concentration of commercially available dextran having a weight-average molecular weight of 40,000 Da of 1,000 ppm and a temperature of 25°C.

$$T = \{(\text{refractive index of liquid to be filtered}) - (\text{refractive index of permeate})\}/(\text{refractive index of liquid to be filtered}) \times 100 \qquad \text{Formula (2)}$$

Here, the crossflow linear velocity is a value obtained by dividing the flow rate of the liquid to be filtered in the direction perpendicular to the filtration direction by the sectional area of the channel of the flow. The transmembrane pressure difference is a difference between the pressure on the liquid to be filtered side and the pressure on the permeate side across the porous membrane.

When the average value of the surface pore diameter [nm] of the surface portion of the porous membrane is 5.0 nm or more and 12 nm or less, coarse contaminant components and objects to be removed in the liquid to be filtered are prevented from entering the porous membrane, and high contamination resistance is easily exhibited, which is preferable. The average value of the surface pore diameter [nm] of the surface portion is more preferably 5.0 nm or more and 8.0 nm or less. The surface pore diameter is the diameter of a pore present in the surface when the surface of the porous membrane is observed. In the case of determining the surface pore diameter of the porous membrane, an image obtained by observing the surface of the porous membrane with a SEM is binarized using free software "ImageJ". When binarization is performed, Create Background is performed with 1 pixel in Subtract Background, and then the condition: RenyiEntropy is selected in Threshold (threshold for binarization). In the obtained binarized image, the area of each pore is determined by selecting Area in Analyze Particles, and the diameter calculated assuming each pore as a circle is defined as the surface pore diameter. When the average value of the surface pore diameters is to be determined, the pore diameters of 1,000 or more pores are averaged.

When the standard deviation of the surface pore diameter [nm] of the porous membrane is 1.0 nm or more and 5.0 nm or less, the load of the contaminants on the porous membrane can be made uniform, and excellent contamination resistance is easily exhibited, which is preferable. When the standard deviation is 1.0 nm or more and 5.0 nm or less, the load of the contaminants on the porous membrane can be made uniform, and excellent contamination resistance is easily exhibited, which is preferable. The standard deviation of the surface pore diameter is more preferably 1.0 nm or more and 4.0 nm or less, still more preferably 1.0 nm or more and 3.0 nm or less. The standard deviation of the surface pore diameter can be determined by binarizing and analyzing as described above the SEM image obtained by observing the surface of the porous membrane.

When the number of surface pores observed on the surface of the porous membrane is 200 pores/$\mu$m$^2$ to 2,000 pores/$\mu$m$^2$, contaminant components in the liquid to be filtered can be dispersed in the porous membrane, and filtration of highly turbid water can be easily and stably performed for a long period of time, which is preferable. Even if the contaminant components in the liquid to be filtered have partially clogged the surface pores as the filtration progresses, when the number of surface pores is large, the number of channels through which the liquid to be filtered permeates the porous membrane is likely to be sufficiently secured, which is preferable. When the number of surface pores is 200 pores/$\mu$m$^2$ or more, it is easy to sufficiently secure channels until cleaning such as backpressure washing is performed even in the case of a contaminative liquid to be filtered. The number of surface pores of the porous membrane is more preferably 290 pores/$\mu$m$^2$ to 1,500 pores/$\mu$m$^2$, particularly preferably 350 pores/$\mu$m$^2$ to 1,000 pores/$\mu$m$^2$. The number of surface pores of the porous membrane is the number of pores present in the surface when the surface of the porous membrane is observed. In the case of determining the number of surface pores of the porous membrane, an image obtained by observing the surface of the porous membrane with a SEM is binarized using free software "ImageJ". When binarization is performed, Create Background is performed with 1 pixel in Subtract Background, and then the condition: RenyiEntropy is selected in Threshold (threshold for binarization). In the obtained binarized image, the number of pores in the range observed is determined by Analyze Particles. In the case of determining the number of surface pores per unit area [pores/$\mu$m$^2$], 1,000 or more pores are observed, and the number of pores is divided by the total area of the observed region.

When a value X obtained by dividing the number of surface pores by the average value of the surface pore diameters is 30 pores/$\mu$m$^2$/nm or more and 100 pores/$\mu$m$^2$/nm or less, the contaminant components in the liquid to be filtered can be prevented from entering the pores, and the number of channels through which the permeate passes through the porous membrane can be sufficiently secured, so that the permeate property is easily exhibited, which is preferable. The value X is more preferably 50 pores/$\mu$m$^2$/nm or more and 100 pores/$\mu$m$^2$/nm or less, still more preferably 60 pores/$\mu$m$^2$/nm or more and 100 pores/$\mu$m$^2$/nm or less. The number of surface pores of the porous membrane can be determined by binarizing an image obtained by observing the surface of the porous membrane with a SEM in the same manner as in the case of determining the surface pore diameter, and analyzing the image with Analyze Particles. The number of surface pores is divided by the area of the analyzed image to obtain the number of pores per unit area. Similarly to the pore diameter, an image including 1,000 or more pores is analyzed to calculate the number.

In addition, the porous membrane in the present application preferably has a nano-network structure in the surface portion thereof. In the nano-network structure, the average value of sectional pore diameters [nm] in a section of the outermost surface portion is 1 nm to 99 nm, and the number of sectional pores is 100 pores/$\mu$m$^2$ to 1,000 pores/$\mu$m$^2$, in the outermost surface portion spanning 2 $\mu$m in thickness from the surface in the surface portion of the porous membrane. When the porous membrane has a nano-network structure, the porous membrane easily exhibits excellent contamination resistance, which is preferable. The sectional pores are pores observed on the section of the outermost surface portion. Since the average value of the sectional pore diameters [nm] in the section of the outermost surface portion is as fine as 1 nm to 99 nm, it is easy to prevent coarse contaminant components and objects to be removed in the liquid to be filtered from entering the porous membrane by trapping these components with the outermost surface portion of the porous membrane. Furthermore, since the number of sectional pores is as large as 100 pores/$\mu$m$^2$ to 1,000 pores/$\mu$m$^2$, the pores are formed in all directions vertically and horizontally, and the channels are easily linearly connected, so that fine contaminant components are less likely to cause clogging when permeating the porous membrane. In addition, even when some pores are clogged, channels through which the liquid to be filtered permeates the porous membrane can be secured, so that the porous membrane is preferable because the porous membrane easily exhibits excellent contamination resistance.

<Method for Manufacturing Porous Membrane>

The porous membrane of the present invention can be obtained by a manufacturing method including: a step (A) of dissolving a polymer in a solvent to provide a polymer solution; and a porous membrane forming step (B) of then coagulating the polymer solution in a non-solvent to form a porous membrane, in which the self-diffusion coefficient [$m^2$/sec] of the polymer dissolved in the polymer solution obtained in the step (A) is $0.8 \times 10^{-11}$ $m^2$/sec to $1.6 \times 10^{-11}$ $m^2$/sec, the self-diffusion coefficient being calculated by all-atom molecular dynamics calculation, the non-solvent used in the step (B) contains 90 to 100 wt% of water, and the temperature of the non-solvent is 6°C to 45°C.

The type of the polymer used in the step (A) is not particularly limited, and specific examples thereof include a polysulfone-based resin, a polyethersulfone-based resin, a polyvinylidene fluoride-based resin, nylon, a cellulose ester such as cellulose acetate and cellulose acetate propionate, a fatty acid vinyl ester, polyvinyl alcohol, polyvinyl acetate, polyvinyl pyrrolidone, ethylene oxide, propylene oxide, a polymer of an acrylic acid ester or a methacrylic acid ester such as polymethyl methacrylate, and a copolymer thereof.

In particular, in order to use the porous membrane for filtration for a long period of time, it is preferable to periodically perform chemical washing of accumulated contaminant components, and it is particularly preferable to contain a polyvinylidene fluoride-based resin having excellent chemical resistance. The polyvinylidene fluoride-based resin refers to a homopolymer of vinylidene fluoride or a copolymer of vinylidene fluoride. Here, the copolymer of vinylidene fluoride refers to a polymer having a vinylidene fluoride residue structure. The polymer having a vinylidene fluoride residue structure is typically a copolymer of a vinylidene fluoride monomer and another fluorine-based monomer or the like. Examples of such a fluorine-based monomer include vinyl fluoride, tetrafluoroethylene, hexafluoropropylene, and chlorotrifluoroethylene. The above vinylidene fluoride copolymer may be copolymerized with ethylene or the like other than the fluorine-based monomer to such an extent that the effect of the present invention is not impaired.

The polyvinylidene fluoride-based resin is more preferably contained in an amount of 50 wt% or more, particularly preferably contained in an amount of 60 wt% or more when the weight of the porous membrane is 100%. The weight-average molecular weight of the polymer is preferably 50,000 to 1,000,000 Da because the later-described self-diffusion coefficient is easily controlled within a relatively slow and suitable range. In addition, a plurality of polymers may be mixed and used.

The solvent preferably contains a good solvent. Here, the "good solvent" refers to a solvent capable of dissolving 5 wt% or more of a polymer even in a low temperature range of 60°C or less. Examples of the good solvent include N-methyl-2-pyrrolidone (hereinafter referred to as "NMP"), 2-pyrrolidone (hereinafter referred to as "2P"), ε-caprolactam (hereinafter referred to as "ε-CL"), dimethyl sulfoxide (hereinafter referred to as "DMSO"), dimethylacetamide (hereinafter referred to as "DMAc"), dimethylformamide (hereinafter referred to as "DMF"), methyl ethyl ketone, acetone, tetrahydrofuran, tetramethylurea, trimethyl phosphate, and mixed solvents thereof. The good solvent is more preferably contained in the solvent in an amount of 40 wt% or more, particularly preferably contained in an amount of 60 wt% or more. When a large amount of the good solvent is contained, a polymer chain is expanded in the polymer solution, and the self-diffusion coefficient described later is easily controlled within a relatively slow and suitable range, which is preferable

Here, the "non-solvent" in the step (B) refers to a solvent that does not dissolve or swell a polymer even when the non-solvent is heated to a high temperature up to a boiling point. Examples of the non-solvent include water, hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, an aliphatic hydrocarbon such as polyethylene glycol having a low molecular weight, an aromatic hydrocarbon, an aliphatic polyhydric alcohol, an aromatic polyhydric alcohol, a chlorinated hydrocarbon, other chlorinated organic liquids, and mixed solvents thereof. The concentration (wt%) of the polymer in the polymer solution is preferably equal to or higher than the entanglement concentration in order to control the self-diffusion coefficient within a suitable range, and more specifically, it is preferably 10 to 40 wt%, further preferably 12 to 30 wt%, particularly preferably 15 to 25 wt%.

The porous membrane forming step (B) of coagulating the polymer solution in a non-solvent to form a porous membrane is a step of forming a porous membrane by what is called non-solvent-induced phase separation. When the polymer solution comes into contact with the non-solvent, the polymer cannot be completely dissolved in the solvent, phase separation occurs into a polymer-rich phase and a solvent-rich phase, and each phase coarsens while coalescing with the same phase in the surroundings.

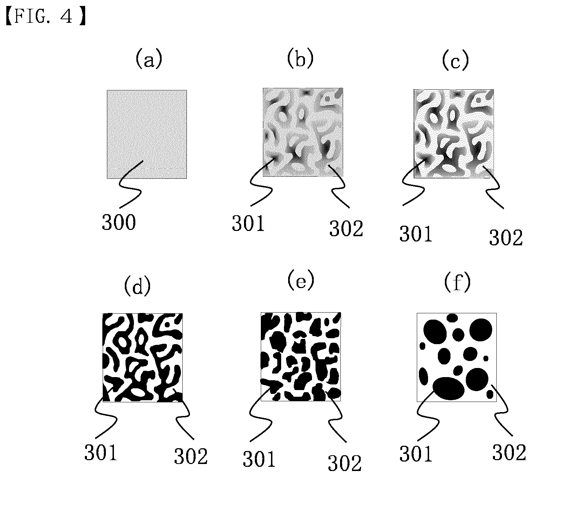

Fig. 4 schematically shows a process of forming the porous membrane in the step (B). In the order of Figs. 4(a) to 4(f), phase separation proceeds in the polymer solution, and a portion (polymer-rich phase 301) having a high polymer concentration coarsens. In this phase separation and/or coarsening process, exchange between the solvent and the non-solvent proceeds, and when the concentration of the non-solvent exceeds a certain level, the polymer is solidified, and the structure of the porous membrane is immobilized. At this time, a solvent-rich phase 302 becomes pores of the porous membrane.

As a result of intensive studies, the inventors have found that in the manufacture of the porous membrane of the present invention, by setting the self-diffusion coefficient of the polymer to a relatively low range of $0.8 \times 10^{-11}$ $m^2$/sec to $1.6 \times 10^{-11}$ $m^2$/sec, the progress of phase separation and coarsening is suppressed, and coagulation can be performed in a state where fine polymer-rich phases 301 and fine solvent-rich phases 302 are present and in large amounts. When the self-diffusion coefficient is $0.8 \times 10^{-11}$ $m^2$/sec or more, the polymer has a diffusion coefficient sufficient for phase separation from the solvent, and pores are easily formed. When diffusion of the polymer is so slow that phase separation is difficult, pores are hardly formed. When the self-diffusion coefficient is $1.6 \times 10^{-11}$ $m^2$/sec or less, it is easy to form many micropores by suppressing the progress of excessive phase separation and coarsening and suppressing the coalescence of the pores. That is, by appropriately controlling the self-diffusion coefficient of the polymer in a relatively low range, a porous membrane having many micropores can be formed. The self-diffusion coefficient is more preferably $0.8 \times 10^{-11}$ $m^2$/sec to $1.4 \times 10^{-11}$ $m^2$/sec, still more preferably $0.8 \times 10^{-11}$ $m^2$/sec to $1.1 \times 10^{-11}$ $m^2$/sec.

The self-diffusion coefficient is determined by, for example, a method of determining the self-diffusion coefficient by all-atom molecular dynamics calculation. The all-atom molecular dynamics calculation is a method of obtaining a trajectory of each atom by solving the equation of motion of a molecular population system for every constituent atom. First, a polymer solution system is produced so as to have a polymer concentration (wt%) to be actually used. At this time, 1 model polymer chain is modeled so as to have a molecular weight of 800 to 6,000 that is 1/200 to 1/5 of the weight-average molecular weight of a polymer actually used. As the potential parameter used in the molecular dynamics calculation, known parameters such as those disclosed in DREIDING [S. L. Mayo, B. D. Olafson, W. A. Goddard III, J. Phys. Chem. 94, 8897 (1990).], GAFF [J. Wang, R. M. Wolf, J. W. Caldwell, P. A. Kollman, D. A. Case, J. Comput. Chem. 25, 1157 (2004)], OPLS-AA [W. L. Jorgensen, D. S. Maxwell, Julian Tirado-Rives, J. Am. Chem. Soc. 118, 11225 (1996)], and CHARMM [B. R. Brooks, R. E. Bruccoleri, B. D. Olafson, D. J. States, S. Swaminathan, M. Karplus, J. Comput. Chem. 4, 187 (1983)] can be used, but a parameter that reproduces the density or cohesive energy, which is a physical quantity representing an aggregation state of a solution system, is preferable.

As a result of examining the reproducibility of the aggregation state by the inventors, it has been found that it is particularly preferable to use GAFF or OPLS-AA. Further, an isothermal-isobaric ensemble is configured by controlling the temperature to 25°C by the Nose-Hoover method [Hoover, W. G. Phys. Rev. A, 31, 1695 (1985).] and the pressure to 1 bar by the Andersen method [H. C. Andersen, J. Chem. Phys. 72, 2384 (1980)]. At this time, the short-ranged Lennard-Johns interaction is handled by applying a switch function from 1.0 nm to the cutoff 1.2 nm, and the long-range electrostatic interaction is calculated by the Particle Mesh Ewald method. Molecular dynamics calculation is performed with the isothermal-isobaric ensemble until the density becomes constant, then the unit cell length is adjusted so as to have an average density, and additional calculation of 11 ns is performed with an isothermal ensemble. Using the trajectory for 10 ns, the mean square displacement (MSD) of each atom of the polymer is obtained, and the self-diffusion coefficient of the polymer is calculated from the following Formula (3). At this time, it is confirmed that the value obtained by dividing log (MSD) by log (t) is in the range of 0.9 to 1.1 for the ranges of MSD and t used for the calculation of D. When a plurality of types of polymers are mixed to form a polymer solution, a value obtained by determining the weighted average of the self-diffusion coefficients of respective polymers based on the percentages by weight of the polymers is defined as the self-diffusion coefficient of the polymers in the polymer solution.

$$D = MSD/6t \quad \cdots\cdots \quad Formula\ (3)$$

D: Self-diffusion coefficient t: Time

When the non-solvent used for coagulation contains 90 to 100 wt% of water in the manufacture of the porous membrane of the present invention, coagulation is fast, and the self-diffusion coefficient in the polymer solution tends to affect the rate of phase separation and coarsening. In addition, when the temperature of the non-solvent is 6°C to 45°C, coagulation is fast, and the self-diffusion coefficient in the polymer solution tends to affect the rate of phase separation and coarsening. The temperature of the non-solvent is preferably 35°C to 40°C. By setting the temperature of the non-solvent to 35°C to 40°C, particularly, the coagulation is accelerated, and a large amount of β-type crystals can be generated in terms of crystal form. That is, as described above, by efficiently exchanging the solvent in the polymer solution and the non-solvent in the coagulation bath while suppressing the self-diffusion coefficient of the polymer in the polymer solution to a low range, and further accelerating the coagulation, it is possible to obtain a porous membrane that achieves both an increase in the ratio of β-type crystals and a large number of surface pores.

With regard to the manufacture of the porous membrane of the present invention, in the step (A) described above, the solvent preferably contains a hydrogen bonding solvent having a hydrogen bond donor property and a hydrogen bond acceptor property and having a molecular weight of 500 Da or less, and the self-diffusion coefficient of the polymer is easily controlled within an appropriate range. Having a hydrogen bond donor property means having a positively polarized hydrogen atom, and specifically, having a hydroxy group (OH group), a carboxy group (COOH group), an amino group (NH group), or the like. Having a hydrogen bond acceptor property means having a lone electron pair, specifically, having a carbonyl group, an alkoxy group, a cyano group, or the like. When the solvent has a hydrogen bond donor property and a hydrogen bond acceptor property, interaction due to hydrogen bonding between the solvent and the solvent is strong, movement of the solvated polymer is suppressed, and the self-diffusion coefficient of the polymer is easily controlled to a relatively slow and suitable range. The solvent having a hydrogen bond donor property and a hydrogen bond acceptor property is not particularly limited, and specific examples thereof include 2P, $\varepsilon$-CL, 1,3-dimethylurea, N-methylacetamide, hydantoin, 2-imidazolidinone, and DL-pyroglutamic acid.

In the step (A) described above, the polymer to be dissolved contains a polymer having a hydrogen bond donor property and/or a hydrogen bond acceptor property, so that the self-diffusion coefficient of the polymer is easily controlled within an appropriate range, which is preferable. This is because when the polymer has a hydrogen bond donor property and/or a hydrogen bond acceptor property, the polymer interacts with a solvent having a hydrogen bond donor property and a hydrogen bond acceptor property by hydrogen bonding, and the self-diffusion coefficient of the polymer is easily controlled to a relatively slow and suitable range. The polymer having a hydrogen bond donor property and/or a hydrogen bond acceptor property is more preferably contained in an amount of 10 wt% to 50 wt% in the porous membrane from the viewpoint of controlling the self-diffusion coefficient of the polymer within an appropriate range.

Furthermore, if the value obtained by dividing the number of moles of the hydrogen bond acceptor functional group contained in the solvent in the step (A) by the number of moles of the hydrogen bond donor functional group contained in the polymer having a hydrogen bond donor property and/or a hydrogen bond acceptor property is 1.0 to 12, the hydrogen bond between the polymer and the solvent falls within an appropriate range, and the self-diffusion coefficient of the polymer is easily controlled to fall within a relatively slow and appropriate range. The value is more preferably 2.0 to 9.0, particularly preferably 5.4 to 8.0.

If the value obtained by dividing the number of moles of the hydrogen bond donor functional group contained in the solvent in the step (A) by the number of moles of the hydrogen bond acceptor functional group contained in the polymer having a hydrogen bond donor property and/or a hydrogen bond acceptor property is 0.5 to 5.0, the hydrogen bond between the polymer and the solvent falls within an appropriate range, and the self-diffusion coefficient of the polymer is easily controlled to fall within a relatively slow and appropriate range. The value is more preferably 1.5 to 2.3, particularly preferably 1.8 to 2.3.

The porous membrane of the present invention may further include another layer. In that case, it is preferable that the porous membrane of the present invention be provided in a surface portion. If the porous membrane of the present invention is provided in the surface portion, components contained in the liquid to be filtered are less likely to enter the inner portion of the porous membrane, and high permeation performance can be maintained for a long period of time. The above other layer is not particularly limited as long as it is a component capable of overlapping the porous membrane and forming a layer, but the other layer is preferably a support. Here, the "support" refers to a structure that physically reinforces the porous membrane and has a higher breaking strength than the porous membrane. In order to increase the breaking strength of the support, the breaking strength (breaking strength per unit area) of the support is preferably 3 MPa or more, more preferably 10 MPa or more. When the composite membrane in which the other layer and the porous membrane of the present invention are arranged in layers has a hollow fiber shape, the breaking strength of the support is preferably 300 gf or more, more preferably 800 gf or more.

A liquid can be filtered with a membrane filtration apparatus using the porous membrane of the present invention obtained as described above. Examples of the membrane filtration apparatus include, but are not limited to, apparatus including a raw water tank, a booster pump, a module including about thousands to tens of thousands of porous hollow fiber membranes of the present invention, a filtrate tank, a backwash pump, and the like. As a liquid filtration method, for example, a liquid to be filtered such as factory effluent can be subjected to an operation at an operating pressure of 10 kPa to 1 MPa using the above membrane filtration apparatus to remove organic substances and the like contained in the water to be filtered, but the liquid filtration method is not limited thereto.

A fresh water generation system using a reverse osmosis membrane has been applied in many industries and water treatment fields including desalination of seawater, and it has been demonstrated that the system is superior to other separation methods in terms of separation performance, energy efficiency, and the like. On the other hand, in the fresh water generation system, there is the problem that the transmembrane pressure difference rapidly increases due to microbial growth on the membrane surface or adhesion of a biofilm to the membrane surface, that is, biofouling, and the permeability and separability of the membrane decrease.

When biofouling increases the transmembrane pressure difference or reduces the permeability and separability of the membrane, it is common to clean the membrane. Examples of the cleaning method include what is called flushing in which filtration is temporarily stopped and a liquid to be filtered or filtrate water is supplied to the membrane surface for cleaning, and chemical washing in which cleaning is performed using a cleaning agent. However, once fouling progresses, even if cleaning is performed, the transmembrane pressure difference, permeability, and separability are not completely recovered, the frequency of cleaning gradually increases, finally operation becomes impossible, and replacement of the membrane is required.

Japanese Patent No. 6561082 and Japanese Patent No. 6630689 disclose methods of focusing on a biopolymer contained as a part of organic substances in water to be treated, adjusting the biopolymer in the water to be treated to a predetermined threshold or less, and performing membrane separation, and the predetermined threshold is any value in the range of 9 μg/L or more and 12 μg/L or less, or 9 μg/L or more and 17 μg/L or less. The biopolymer is a hydrophilic high-molecular-weight organic substance (such as polysaccharides and proteins) having a molecular weight of about 10 to 20 kDa or more among the organic substances.

However, as a result of measuring the biopolymer concentration of seawater by the present inventors in the course of examining the present invention, the biopolymer concentration was 122 to 218 μg C/L, and the predetermined thresholds disclosed in Japanese Patent No. 6561082 and Japanese Patent No. 6630689 were very low concentrations. In general water to be treated such as seawater and sewage and wastewater treatment water, the biopolymer concentration is high as described above, and it is difficult to realize the predetermined thresholds disclosed in Japanese Patent No. 6561082 and Japanese Patent No. 6630689. In addition, not a reverse osmosis membrane but a microfiltration membrane or an ultrafiltration membrane is assumed as a supply target, and it is difficult to apply the reverse osmosis membrane as it is because the fouling mechanism is different from that of the reverse osmosis membrane.

Therefore, the present invention suppresses the progress of the fouling in the pretreatment step and on the reverse osmosis membrane with the water to be treated having a high biofouling potential in the case of obtaining fresh water by performing desalination of seawater, brackish water, or the like using a membrane, the case of purifying sewage and wastewater treatment water, industrial wastewater, or the like to obtain recycled water, or the like. The fresh water generation method of the present invention for solving the abovementioned problems has any of the following configurations. A fresh water generation method includes: a pretreatment step of pretreating water to be treated to provide water to be fed to a reverse osmosis membrane; and a reverse osmosis membrane treatment step of filtering the water to be fed to a reverse osmosis membrane with a reverse osmosis membrane to provide permeate water, in which the water to be fed to a reverse osmosis membrane having a biopolymer concentration reduced to 75 μg C/L or less by the pretreatment of the water to be treated having a biopolymer concentration of 100 μg C/L or more is supplied to the reverse osmosis membrane, the pretreatment step includes ultrafiltration membrane treatment, and the ultrafiltration membrane is the porous membrane described above.

The fresh water generation method of the present invention is carried out in a fresh water generation system in which water to be treated 401 is pretreated with an ultrafiltration membrane, then treated with a reverse osmosis membrane 402, and separated into permeate water 403 and concentrated water 404. Examples of the water to be treated include seawater, brackish water, river water, lake water, groundwater, sewage, and secondary effluent. Since the water to be treated contains solid components such as turbid matter, when the water to be treated is directly filtered with a reverse osmosis membrane, the amount of solid components adhering to the membrane surface increases, the pressure difference rapidly increases, and the operation becomes impossible. Therefore, the water to be treated 401 is treated in advance in a pretreatment step 405 to provide water 406 to be fed to a reverse osmosis membrane, and then the water is supplied to the reverse osmosis membrane.

In the present invention, in order to suppress the progress of fouling of the reverse osmosis membrane, the water 406 to be fed to a reverse osmosis membrane having a biopolymer concentration reduced to 75 μg C/L or less by the pretreatment of the water to be treated 1 having a biopolymer concentration of 100 μg C/L or more is supplied to the reverse osmosis membrane. It is more preferable to supply the water 406 to be fed to a reverse osmosis membrane having a biopolymer concentration reduced to 50 μg C/L or less by the pretreatment of the water to be treated 401 having a biopolymer concentration of 100 μg C/L or more to the reverse osmosis membrane. On the other hand, it takes a lot of energy and cost to set the biopolymer concentration of the water to be treated 401 having a biopolymer concentration of 100 μg C/L or more to less than 20 μg C/L by the pretreatment, and it is preferable to set the biopolymer concentration to 20 μg C/L or more and supply the water 406 to be fed to a reverse osmosis membrane to the reverse osmosis membrane.

The biopolymer is a hydrophilic high-molecular-weight organic substance (such as polysaccharides and proteins) having a molecular weight of about 10 to 20 kDa or more among the organic substances. As a definition and a measurement method of the biopolymer, for example, as described in Huber, S. A., Balz, A., Abert, M., Pronk, W., 2011. Characterisation of aquatic humic and non-humic matter with size-exclusion chromatography e organic carbon detection e organic carbon detection e organic nitrogen detection (LC-OCD-OND). Water Research 45 (2), 879-885, the biopolymer can be measured by organic carbon detection-type exclusion chromatography (LC-OCD). Here, the LC-OCD method is an analysis method in which a TOC component in a sample is fractionated for each molecular weight and shown as a chromatogram, and on the chromatogram, an organic substance having a larger molecular weight and hydrophilicity tends to have a shorter retention time. As measurement conditions of the LC-OCD method, it is possible to use a method in which 250 mm × 20 mm TSK HW50S is used as a column, a flow rate is set to 1.1 mL/min, a sample injection volume is set to 1 mL, a UV wavelength is set to 254 nm, an acid injection volume into an OCD meter is set to 0.2 mL/min, a phosphate buffer with a pH of 6.85 is used as an eluent, and a solution obtained by adding 4 mL of o-phosphoric acid (85%) and 0.5 g of potassium peroxodisulfate to 1 L of ultrapure water is used as an acidifying solution. As a measuring apparatus used in the LC-OCD method, for example, an LC-OCD apparatus (manufactured by DOC-Labar) in which a wet total organic carbon measuring instrument (OCD meter) is connected to high performance liquid chromatography (HPLC) can be used.

The porous membrane of the present invention can be used as an ultrafiltration membrane. That is, in the fresh water generation method of the present invention, as the ultrafiltration membrane, the porous membrane containing the polyvinylidene fluoride resin and having the surface A and the surface B, in which the ratio ($H_\alpha/H_\beta$) between $\alpha$-type crystals ($H_\alpha$) and $\beta$-type crystals ($H_\beta$) in the crystalline portion of the polyvinylidene fluoride resin measured by an attenuated total reflection (ATR) method of the surface A is 0 or more and 0.50 or less, the pure water permeability is 0.25 $m^3/m^2/h/50$ kPa or more and 1.2 $m^3/m^2/h/50$ kPa or less, and the average value of the surface pore diameter of the surface A of the porous membrane is 5.0 nm or more and 12.0 nm or less can be used.

As the ultrafiltration membrane, a porous membrane having a removal rate of dextran of 40,000 Da of 45% or more and 80% or less is preferable. When the dextran removal rate is 45% or more and 80% or less, the porous membrane is likely to prevent coarse contaminants and objects to be removed in the liquid to be filtered from entering the membrane and exhibit excellent contamination resistance. In addition, the biopolymer removal rate of the membrane tends to be high, and the biopolymer concentration of the water to be fed to a reverse osmosis membrane can be reduced to 75 $\mu$g C/L or less with a reduced addition amount of flocculant or without using a flocculant at all. The phrase "the water to be treated does not contain a flocculant" means that the flocculant is not added to the water to be treated, that is, the water to be treated uses no flocculant. The type of the compound of the flocculant is not limited as long as the flocculant flocculates the biopolymer, and the concentration of the flocculant corresponds to 0% to 0.05%. In particular, the removal rate of dextran having a weight-average molecular weight of 40,000 Da of the ultrafiltration membrane is particularly preferably 45% or more and 80% or less, more preferably 50% or more and 80% or less.

A reverse osmosis membrane 2 may be made of any material as long as the salt concentration can be lowered so that the water to be treated can be used for drinking water, industrial water, municipal water, and the like, and examples thereof include those made of cellulose acetate-based and polyamide-based materials. Among them, a membrane made of a polyamide-based material is particularly effective in the method of the present invention. Polyamide-based membranes have low resistance to chlorine, which is most commonly used as a disinfectant to prevent biofilm growth, and it is difficult to prevent biofouling because membrane degradation occurs significantly even with a low concentration of chlorine. Therefore, the effect of implementing the present invention is remarkably exhibited.

As the rate of decrease in water permeability of the reverse osmosis membrane is lower, the chemical washing interval of the reverse osmosis membrane becomes longer and the replacement frequency becomes lower. In addition, when the reverse osmosis membrane is operated at a low flow rate, an increase in the operation pressure difference can be suppressed. As a result, the number of reverse osmosis membranes required for fresh water generation is reduced, which is preferable. The rate of decrease in water permeability of the reverse osmosis membrane is preferably 0.20 (%/hr) or less, more preferably 0.18 (%/hr) or less.

EXAMPLES

Hereinafter, the present invention will be described specifically with reference to examples, but the present invention is not limited to these examples at all. The measurement methods and evaluation methods are described below.

(i) Measurement of Ratio between $\alpha$-type Crystals and $\beta$-type Crystals in Crystalline Portion of PVDF Resin

The IR spectrum of the membrane surface was measured at a resolution of 8 $cm^{-1}$ by the ATR method (total reflection measurement method) using IRTracer-100 manufactured by Shimadzu Corporation. From the measurement area, the peak height ($H_\alpha$) of the signal of the $\alpha$-type crystals appearing at the position of 763 $cm^{-1}$, and the peak height ($H_\beta$) of the signal of the $\beta$-type crystals appearing at 840 $cm^{-1}$ in the obtained spectrum, the ratio between the $\alpha$-type crystals and the $\beta$-type crystals was calculated using the following formula.

$$\text{Ratio of } \alpha\text{-}/\beta\text{-type crystals} = H_\alpha/H_\beta \quad \cdots \cdots \text{ Formula (1).}$$

(ii) Pure Water Permeability

A small module that had a length of about 10 cm and was formed of about 1 to 10 hollow fiber membranes was produced, distilled water was fed from the surface A under the conditions of a temperature of 25°C and a filtration differential pressure of 18.6 kPa to filter the whole amount of the water, and the amount of permeate water ($m^3$) in a certain period of time was measured. The obtained value was converted into a value per unit time (hr), unit effective membrane area ($m^2$), and 50 kPa, and calculated.

(iii) Method for Evaluating Removal Rate of Dextran with Weight-Average Molecular Weight of 40,000 Da

With distilled water, 1,000 ppm of dextran (manufactured by Sigma-Aldrich Co. LLC; weight-average molecular weight: 40,000 Da) was mixed to prepare an aqueous dextran solution. The prepared aqueous dextran solution was supplied to the porous membrane at 25°C so as to have a transmembrane pressure difference of 10 kPa and subjected to crossflow filtration at a crossflow linear velocity of 1.0 m/sec to sample the permeate. The aqueous dextran solution (liquid to be filtered) supplied to the porous membrane was sampled at the timing when the permeate was sampled. The refractive indices of the permeate and the liquid to be filtered were measured, and the removal rate T was determined on the basis of Formula (2).

T = {(refractive index of liquid to be filtered) - (refractive index of permeate)}/(refractive index of liquid to be filtered) $\times$ 100

Formula (2) .

(iv) Measurement of Degree of Crystallinity of Polymer Resin Constituting Porous Membrane

Measurement of the degree of crystallinity of the polymer resin of the porous membrane in the form of a hollow fiber membrane is shown. For the measurement, a slice within 50 $\mu$m from the outer surface of the hollow fiber membrane was used. A sample was collected by cutting open the outer surface of the hollow fiber membrane with a commercially available freezing microtome (manufactured by Leica; Jung CM3000). The hollow fiber membrane immersed in distilled water was frozen at -20°C with a freezing microtome (manufactured by Leica; Jung CM3000), and a blade was placed in a direction parallel to the surface of the hollow fiber membrane. First, the hollow fiber membrane was brought close to the blade in increments of the moving distance of 5 $\mu$m, and the hollow fiber membrane was cut once. Thereafter, the movement distance was set to 40 $\mu$m, and cutting was further performed once, so that a slice of the hollow fiber membrane up to 40 to 45 $\mu$m in thickness from the surface was collected. When a slice was set in a DSC (manufactured by Seiko Instruments Inc.: DSC6200) and the temperature was raised from room temperature to 300°C at 5°C/min, an endothermic peak of each polymer resin was regarded as the heat of fusion, and the quantity of the heat was divided by the quantity of heat of fusion of perfect crystals of the polymer resin, so that calculation was performed as a percentage. For example, for a polyvinylidene fluoride-based resin, an endothermic peak observed in the range of 100 to 190°C was regarded as the heat of fusion of the polyvinylidene fluoride-based resin, and the quantity of the heat was divided by 104.6 J/g, which is the quantity of heat of fusion of perfect crystals of the polyvinylidene fluoride-based resin, so that calculation was performed as a percentage.

(v) Surface Structure of Surface Portion (Pore Diameter, Number, Standard Deviation)

The porous membrane was vacuum-dried at 25°C overnight and then observed with a SEM (manufactured by Hitachi High-Technologies Corporation; S-5500) at 30,000 to 100,000 fold magnification. An image obtained by observing the surface of the porous membrane with the SEM was binarized using free software "ImageJ". When binarization was performed, Create Background was performed with 1 pixel in Subtract Background, and then the condition: RenyiEntropy was selected in Threshold (threshold for binarization). In the obtained binarized image, the area of each pore was determined by selecting Area in Analyze Particles, and the diameter calculated assuming each pore as a circle was defined as the surface pore diameter. When the average value of the surface pore diameters was to be determined, the pore diameters of 1,000 or more pores were averaged. Similarly, the standard deviation of the surface pore diameters was determined. The number of pores was divided by the area of the observed region to obtain the number of pores per unit area.

(vi) Self-Diffusion Coefficient of Polymer

The self-diffusion coefficient was determined by all-atom molecular dynamics calculation. A polymer solution system was produced so as to have a polymer concentration (wt%) to be actually used. At this time, one model polymer chain was modeled so as to have a molecular weight of 800 to 6,000 that was 1/200 to 1/5 of the weight-average molecular weight of the polymer actually used. GAFF2 was used as a potential parameter used in the molecular dynamics calculation. An isothermal-isobaric ensemble was constructed by controlling the temperature to 25°C and the pressure to 1 bar. At this time, the short-ranged Lennard-Johns interaction was handled by applying a switch function from 1.0 nm to the cutoff 1.2 nm, and the long-range electrostatic interaction was calculated by the Particle Mesh Ewald method. Molecular dynamics calculation was performed with the isothermal-isobaric ensemble until the density became constant, then the unit cell length was adjusted so as to have an average density, and additional calculation of 11 ns was performed with an isothermal ensemble. Using the trajectory for 10 ns, the mean square displacement (MSD) of each atom of the polymer was obtained, and the self-diffusion coefficient was calculated from the following Formula (3). At this time, it was confirmed that the value obtained by dividing log (MSD) by log (t) was in the range of 0.9 to 1.1 for the ranges of MSD and t used for the calculation of D. When a plurality of types of polymers were mixed to form a polymer solution, a value obtained by determining the weighted average of the self-diffusion coefficients of respective polymers based on the percentages by weight of the polymers was defined as the self-diffusion coefficient of the polymers in the polymer solution.

$$D = MSD/6t \quad \cdots \cdots \quad \text{Formula (3)}$$

D: Self-diffusion coefficient t: Time.

(vii) Filtration Evaluation Method for Wastewater from Chemical Factory

Wastewater (TOC: 30 mg/L, turbidity: 11 NTU) from a chemical factory was supplied to a porous membrane at 25°C so as to have a transmembrane pressure difference of 100 kPa, the whole amount was filtered, and the amount of the permeate was measured. When the amount of the permeate reached 28 L/m$^2$, backfiltration was performed until the backfiltration permeation amount reached 3 L/m$^2$ so that the transmembrane pressure difference was 150 kPa. Filtration and backfiltration were repeatedly performed, and the ratio (F2/F1) of the filtration fluxes, which is the initial ratio of the filtration fluxes, between a filtration flux (F1) immediately after the start of filtration and a filtration flux immediately after (F2) the start of filtration after the amount of the permeate per unit area reached 400 L/m$^2$ or more was calculated. As the initial ratio of the filtration fluxes becomes closer to 1, the initial characteristics are maintained, the porous membrane is less likely to be clogged even after long-term use, and the standard at which good filtration can be performed is 50% or more.

(viii) Sectional Structure of Outermost Surface Portion (Presence or Absence of Nano-Network Structure, Pore Diameter, Number, Standard Deviation)

A porous membrane embedded using a commercially available embedding agent for producing a frozen tissue section (manufactured by Tissue-Tek; O.C.T. Compound) was cut to collect a slice with a thickness of 100 nm in a direction perpendicular to the surface of the porous membrane at -40°C using a cryo-ultramicrotome (manufactured by Leica; FC7), and the slice was vacuum-dried at room temperature for 12 hours. The section of the outermost surface portion of the porous membrane was observed with a TEM (manufactured by JEOL Ltd.; JEM-1400Plus) to obtain an image, and the image was binarized using free software "ImageJ". When binarization was performed, the condition Minimum was selected in Threshold (threshold for binarization). In the obtained binarized image, the area of each pore was determined by selecting Area in Analyze Particles, and the diameter calculated assuming each pore as a circle was defined as the sectional pore diameter.

When the average value of the sectional pore diameters is to be determined, the pore diameters of 1,000 or more pores are averaged. In addition, the number of sectional pores was divided by the area of the analyzed region to obtain the number of pores per unit area. Similarly to the pore diameter, an image including 1,000 or more pores is analyzed to calculate the number. Similarly, the standard deviation of the sectional pore diameters was determined. The total circumferential length of the sectional pore diameter was determined by binarizing the TEM image obtained by observing the section of the porous membrane as described above, selecting Perim in Analyze Particles to determine the circumferential length of each pore, and dividing the sum by the area of the observed region. In the surface portion of the porous membrane, in the case in which the outermost surface portion spanning 2 μm in thickness from the surface had a network structure in which the average value of sectional pore diameters [nm] in a section of the outermost surface portion was 1 nm to 99 nm and the number of sectional pores was 100 pores/μm$^2$ to 1,000 pores/μm$^2$, it was determined that the porous membrane had a nano-network structure.

(ix) Biopolymer Concentration and Biopolymer Removal Rate

The biopolymer concentrations in the water to be treated and the water to be fed to a reverse osmosis membrane were measured by organic carbon detection-type exclusion chromatography (LC-OCD) as described in Huber, S. A., Balz, A., Abert, M., Pronk, W., 2011. Characterisation of aquatic humic and non-humic matter with size-exclusion chromatography e organic carbon detection e organic carbon detection e organic nitrogen detection (LC-OCD-OND). Water Research 45 (2), 879-885. Using 250 mm × 20 mm TSK HW50S as a column, a flow rate was set to 1.1 mL/min, a sample injection volume was set to 1 mL, a UV wavelength was set to 254 nm, an acid injection volume into an OCD meter was set to 0.2 mL/min, a phosphate buffer with a pH of 6.85 was used as an eluent, and 4 mL of o-phosphoric acid (85%) and 0.5 g of potassium peroxodisulfate were added to 1 L of ultrapure water as an acidifying solution.

(x) Rate of Decrease in Water Permeability of Reverse Osmosis Membrane

The reverse osmosis membrane was operated at a pressure of 5.5 MPa and a recovery rate of 37%. The recovery rate is calculated as follows: flow rate of water permeating reverse osmosis membrane/(flow rate of water permeating reverse osmosis membrane + flow rate of reverse osmosis membrane concentrated water) $\times$ 100. Here, the rate of decrease in water permeability of the reverse osmosis membrane was determined on the basis of Formula (4) using the flow rate of the permeate water 1 hour after the start of the operation of the reverse osmosis membrane and the flow rate 50 hours after the start of the operation. Here, as each flow rate, an amount (g) of permeate water in five minutes was used.

Rate of decrease in water permeability of reverse osmosis membrane [%/hr] = (amount of permeate water [g] 51 hours after start of operation)/(amount of permeate water [g] 1 hour after start of operation)/50 $\times$ 100      Formula (4) .

(xi) Water Permeability Initial Value Ratio of Ultrafiltration Membrane

The water to be treated was supplied to an ultrafiltration membrane so as to have a transmembrane pressure difference of 100 kPa, to filter the entire amount of the water, and the amount of the permeate water was measured. When the amount of the permeate water reached 28 $L/m^2$, backfiltration was performed until the backfiltration permeate water amount reached 3 $L/m^2$ so that the transmembrane pressure difference was 150 kPa. Filtration and backfiltration are repeated, and the flow rate F1 (g) of the permeate water immediately after the start of filtration with the ultrafiltration membrane and the flow rate F2 (g) of the permeate water immediately after the start of filtration after the amount of the permeate per unit area reaches 400 $L/m^2$ or more are measured. Here, for each flow rate, the amount (g) of permeate water in five minutes was used, and the ratio (F2/F1) of the flow rates of the permeate water was calculated as the water permeability initial value ratio.

(Example 1)

As the porous membrane, a hollow fiber porous membrane containing a support obtained by the following production method was used. A supporting membrane raw solution was prepared by mixing 38 mass% of PVDF (manufactured by Kureha Corporation; KF 1300, weight-average molecular weight: 350,000 Da) and 62 mass% of $\gamma$-butyrolactone and dissolving them at 160°C. The supporting membrane raw solution was discharged from a double tube spinneret with an accompanying flow of an 85-mass% aqueous $\gamma$-butyrolactone solution as a hollow-part forming liquid. The discharged supporting membrane raw solution was coagulated in a cooling bath containing an 85-mass% aqueous $\gamma$-butyrolactone solution at a temperature of 20°C placed 30 mm below the spinneret to prepare a hollow fiber-like support having a spherical structure.

A polymer solution having a composition ratio shown in Table 1 was prepared by mixing 12 mass% of PVDF1 (manufactured by Arkema K.K.; Kynar (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 68.7 mass% of NMP, and 12.1 mass% of 2P and stirring them at 120°C for 4 hours.

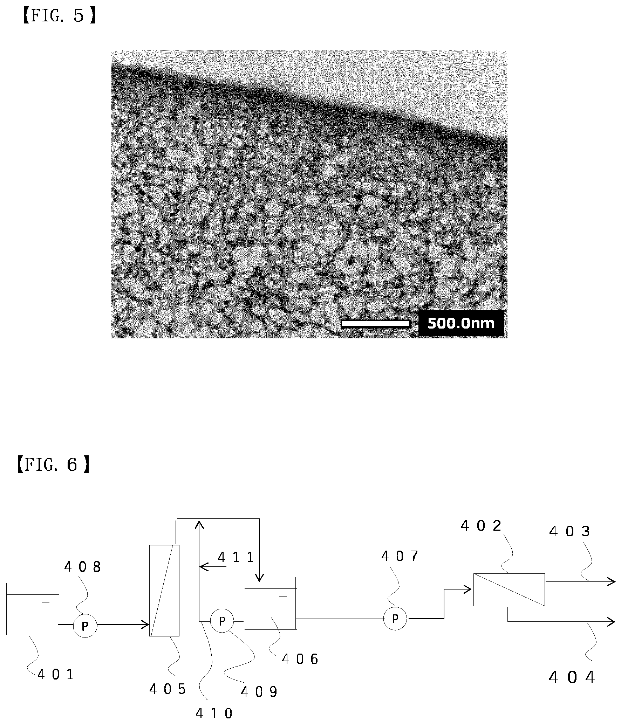

Next, the polymer solution was uniformly applied to the outer surface of the hollow fiber-like support at 10 m/min (thickness: 50 $\mu$m). The support to which the polymer solution was applied was immersed 1 second after application for 10 seconds in a coagulation bath of distilled water at 35°C to be coagulated to form a porous membrane having a three-dimensional network structure. The evaluation results of the obtained porous membrane are shown in Table 1. In the porous membrane, the surface portion spanning 10 $\mu$m in thickness from the surface was denser than the inner portion. An image obtained by observing a section of the outermost surface portion of the porous membrane with a TEM is shown in Fig. 5. It was determined from the sectional pore diameter and the number of sectional pores that the porous membrane had a nano-network structure. The obtained porous membrane had a ratio $H_\alpha/H_\beta$ of 0.37, a pure water permeability of 0.43 $m^3/m^2/h/50$ kPa, and a dextran removal rate of 55%, which were good. In addition, the degree of crystallinity of the resin of the outer surface portion was as high as 49%. Furthermore, the value X obtained by dividing the number of surface pores by the average value of surface pore diameters was 66, the average surface pore diameter was 7.2 nm, and the standard deviation was 2.5.

As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.63, and the filtration flux could be maintained even after long-term use.

(Example 2)

A porous membrane was obtained by performing membrane formation in the same manner as in Example 1 except that NMP in the polymer solution was changed to DMSO and distilled water in the coagulation bath had 40°C. The evaluation results of the porous membrane are shown in Table 1. In the porous membrane, the surface portion spanning 10 $\mu$m in thickness from the surface was denser than the inner portion. The obtained porous membrane had a ratio $H_\alpha/H_\beta$ of 0.27, a pure water permeability of 0.29 $m^3/m^2/h/50$ kPa, and a dextran removal rate of 63%, which were good.

Further, the value X was 78, the average surface pore diameter was 7.3 nm, and the standard deviation was 1.8. As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.55, and the filtration flux could be maintained even after long-term use.

(Example 3)

A porous membrane was obtained by performing membrane formation in the same manner as in Example 1 except that NMP in the polymer solution was changed to DMF and distilled water in the coagulation bath had 25°C. The evaluation results of the porous membrane are shown in Table 1. In the porous membrane, the surface portion spanning 10 $\mu$m in thickness from the surface was denser than the inner portion. The obtained porous membrane had a ratio $H_\alpha/H_\beta$ of 0.24, a pure water permeability of 0.45 $m^3/m^2/h/50$ kPa, and a dextran removal rate of 47%, which were good.

Further, the value X was 48, the average surface pore diameter was 8.5 nm, and the standard deviation was 3.1. As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.50, and the filtration flux could be maintained even after long-term use.

(Comparative Example 1)

A porous membrane was obtained by performing membrane formation in the same manner as in Example 1 except that in the polymer solution, the entire solvent of was changed to NMP, and the composition ratio was changed. The evaluation results of the porous membrane are shown in Table 2. The porous membrane did not have a nano-network structure. In the porous membrane, the surface portion spanning 10 $\mu$m in thickness from the surface was denser than the inner portion. The obtained porous membrane had a ratio $H_\alpha/H_\beta$ of 1.0, a pure water permeability of 0.41 $m^3/m^2/h/50$ kPa, and a dextran removal rate of 55%. Further, the value X was 13, the average surface pore diameter was 15 nm, and the standard deviation was 6.0. In addition, the degree of crystallinity of the resin of the outer surface portion was as low as 11%. As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.38, and the filtration flux could not be maintained after long-term use.

(Comparative Example 2)

A porous membrane was obtained by performing membrane formation in the same manner as in Comparative Example 1 except that the temperature of the coagulation bath was set to 6°C. The evaluation results of the porous membrane are shown in Table 2. In the porous membrane, the surface portion spanning 10 $\mu$m in thickness from the surface was denser than the inner portion. The obtained porous membrane had a ratio $H_\alpha/H_\beta$ of 0.10, a pure water permeability of 0.10 $m^3/m^2/h/50$ kPa, and a dextran removal rate of 70%, and the requirements were not satisfied. Further, the value X was 10, the average surface pore diameter was 8.0 nm, and the standard deviation was 1.9. As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.37, and the filtration flux could not be maintained after long-term use.

(Comparative Example 3)

A porous membrane was obtained by performing membrane formation in the same manner as in Comparative Example 1 except that PVDF1 in the polymer solution was changed to PVDF2 (manufactured by Solvay S.A.: Solef 9009) and the composition ratio was changed in the membrane formation of Example 1. The evaluation results of the porous membrane are shown in Table 2. The porous membrane did not have a nano-network structure. In the porous membrane, the surface portion spanning 10 $\mu$m in thickness from the surface was denser than the inner portion. The obtained porous membrane had a ratio $H_\alpha/H_\beta$ of 0.22, a pure water permeability of 0.21 $m^3/m^2/h/50$ kPa, and a dextran removal rate of 57%. Further, the value X was 7.6, the average surface pore diameter was 10 nm, the standard deviation was 4.1, and the requirements were not satisfied. As a result of evaluating the long-term stability by (vii) the filtration evaluation method for industrial wastewater, the initial ratio (F2/F1) between the filtration flux (F2) after the amount of the permeate reached 400 $L/m^2$ and the filtration flux (F1) immediately after the start of filtration was 0.40, and the filtration flux could not be maintained after long-term use.

(Comparative Example 4)

A polymer solution was prepared by mixing 20 mass% of PVDF3 (manufactured by Kureha Corporation; KF polymer #110, weight-average molecular weight: 280,000 Da) and 80 mass% of a mixed solvent (DMAc : GBL = 89 : 11), and stirring the mixture at 120°C for 4 hours. A porous membrane was obtained by performing membrane formation in the same manner as in Example 1 except that the distilled water of the coagulation bath had 21°C. The evaluation results of the porous membrane are shown in Table 2. The obtained porous membrane had a ratio $H_\alpha/H_\beta$ of 0.63, a pure water permeability of 0.022 $m^3/m^2/h/50$ kPa, and a dextran removal rate of 66%, and the requirements were not satisfied. Further, the value X was 0.90, the average surface pore diameter was 15 nm, and the standard deviation was 8.5. As a result of evaluating the long-term stability by (vii) the filtration evaluation method for industrial wastewater, the amount of the permeate was remarkably small, and it was difficult to measure the filtration flux.

(Example 4)

In the flow shown in Fig. 6, permeate water through a reverse osmosis membrane was generated from water to be treated. That is, as a result of using seawater 1 (biopolymer concentration: 122 $\mu$g C/L) as water to be treated and using the porous membrane of Example 1 for pretreatment, the biopolymer concentration of water to be fed to a reverse osmosis membrane was 35 $\mu$g C/L. The water to be fed to a reverse osmosis membrane was pressurized with a high-pressure pump and filtered through a reverse osmosis membrane to provide permeate water. The reverse osmosis membrane was a spiral-wound reverse osmosis membrane made of a polyamide as a membrane material and having a desalination rate of 99.8% and a membrane area of 37 $m^2$.
Here, the initial value ratio of water permeability of the ultrafiltration membrane was 0.71, the rate of decrease in water permeability of the reverse osmosis membrane was 0.15%/hr, and filtration with the ultrafiltration membrane was stable without using a flocculant, and filtration with the reverse osmosis membrane was also stable, although the biopolymer concentration in the water to be treated was high. The results are shown in Table 3.

(Example 5)

In the flow shown in Fig. 6, permeate water through a reverse osmosis membrane was generated from water to be treated. That is, as a result of using seawater 2 (biopolymer concentration: 218 $\mu$g C/L) as water to be treated and using the porous membrane of Example 1 for pretreatment, the biopolymer concentration of water to be fed to a reverse osmosis membrane was 47 $\mu$g C/L. The water to be fed to a reverse osmosis membrane was pressurized with a high-pressure pump and filtered through a reverse osmosis membrane to provide permeate water. The reverse osmosis membrane was a spiral-wound reverse osmosis membrane made of a polyamide as a membrane material and having a desalination rate of 99.8% and a membrane area of 37 $m^2$.
Here, the initial value ratio of water permeability of the ultrafiltration membrane was 0.63, the rate of decrease in water permeability of the reverse osmosis membrane was 0.18%/hr, and filtration with the ultrafiltration membrane was stable without using a flocculant, and filtration with the reverse osmosis membrane was also stable, although the biopolymer concentration in the water to be treated was very high. The results are shown in Table 3.

(Comparative Example 5)

In the flow shown in Fig. 6, permeate water through a reverse osmosis membrane was generated from water to be treated. That is, as a result of using the seawater 1 (biopolymer concentration: 122 $\mu$g C/L) as water to be treated and using the porous membrane of Comparative Example 1 for pretreatment, the biopolymer concentration of water to be fed to a reverse osmosis membrane was 85 $\mu$g C/L. The water to be fed to a reverse osmosis membrane was pressurized with a high-pressure pump and filtered through a reverse osmosis membrane to provide permeate water. The reverse osmosis membrane was a spiral-wound reverse osmosis membrane made of a polyamide as a membrane material and having a desalination rate of 99.8% and a membrane area of 37 $m^2$.
Here, the initial value ratio of water permeability of the ultrafiltration membrane was 0.53, the rate of decrease in water permeability of the reverse osmosis membrane was 0.25%/hr, and the rate of decrease in permeability of the reverse osmosis membrane was large. The results are shown in Table 3.

(Comparative Example 6)

In the flow shown in Fig. 6, permeate water through a reverse osmosis membrane was generated from water to be treated. That is, as a result of using the seawater 2 (biopolymer concentration: 218 µg C/L) as water to be treated and using the porous membrane of Comparative Example 1 for pretreatment, the biopolymer concentration of water to be fed to a reverse osmosis membrane was 139 µg C/L. The water to be fed to a reverse osmosis membrane was pressurized with a high-pressure pump and filtered through a reverse osmosis membrane to provide permeate water. The reverse osmosis membrane was a spiral-wound reverse osmosis membrane made of a polyamide as a membrane material and having a desalination rate of 99.8% and a membrane area of 37 m$^2$.

Here, the initial value ratio of water permeability of the ultrafiltration membrane was 0.45, the rate of decrease in water permeability of the reverse osmosis membrane was 0.45%/hr, the decrease in the water permeability of the ultrafiltration membrane was large, and the rate of decrease in the permeability of the reverse osmosis membrane was remarkably large probably because the biopolymer concentration in the water to be treated was very high. The results are shown in Table 3.

[Table 1-1]

| | | | Example 1 | Example 2 |
|---|---|---|---|---|
| Membrane formation condition | Composition of polymer solution | wt% | PVDF1/CTA/CDA/NMP/2P =12/2.4/4.8/68.7/12.1 | PVDF1/CTA/CDA/DMSO/2P =12/2.4/4.8/68.7/12.1 |
| | Hydrogen bonding solvent | - | 2P | 2P |
| | Hydrogen bonding polymer | - | CTA, CDA | CTA, CDA |
| | Acceptor number of solvent/donor number of polymer | mol/mol | 7.2 | 7.2 |
| | Donor number of solvent/acceptor number of polymer | mol/mol | 2.2 | 2.2 |
| | Hydrogen bonding polymer/total polymer | wt% | 38 | 38 |
| | Non-solvent temperature | ° C | 35 | 40 |
| Characteristics of porous membrane | Ratio ($H_a/H_b$) between α-structure crystals ($H_a$) and β-structure crystals ($H_b$) | - | 0.37 | 0.27 |
| | Pure water permeability | m$^3$/m$^2$/h/ 50 kPa | 0.43 | 0.29 |
| | Removal rate of dextran of 40,000 Da | % | 55 | 63 |
| | Average value of surface pore diameters | nm | 7.2 | 7.3 |
| | Number of surface pores/average value of surface pore diameters:X | pores/µm$^2$/nm | 66 | 78 |
| | Presence or absence of nano-network structure | - | Present | - |
| | Standard deviation of surface pore diameter | nm | 2.5 | 1.8 |
| Evaluation result | Initial ratio of filtration fluxes: F2/F1 | | 0.63 | 0.55 |

[Table 1-2]

| | | | | Example 3 |
|---|---|---|---|---|
| Membrane formation condition | Composition of polymer solution | wt% | | PVDF1/CTA/CDA/DMF/2P =12/2.4/4.8/68.7/12.1 |
| | Hydrogen bonding solvent | – | | 2P |
| | Hydrogen bonding polymer | – | | CTA, CDA |
| | Acceptor number of solvent/donor number of polymer | mol/mol | | 7.2 |
| | Donor number of solvent/acceptor number of polymer | mol/mol | | 2.2 |
| | Hydrogen bonding polymer/total polymer | wt% | | 38 |
| | Non-solvent temperature | °C | | 25 |
| Characteristics of porous membrane | Ratio ($H_\alpha/H_\beta$) between α-structure crystals ($H_\alpha$) and β-structure crystals ($H_\beta$) | – | | 0.24 |
| | Pure water permeability | $m^3/m^2/h/$ 50 kPa | | 0.45 |
| | Removal rate of dextran of 40,000 Da | % | | 47 |
| | Average value of surface pore diameters | nm | | 8.5 |
| | Number of surface pores/average value of surface pore diameters:X | pores/$\mu m^2$/nm | | 48 |
| | Presence or absence of nano-network structure | – | | – |
| | Standard deviation of surface pore diameter | nm | | 3.1 |
| Evaluation result | Initial ratio of filtration fluxes: F2/F1 | | | 0.50 |

[Table 2-1]

| | | | Comparative Example 1 | Comparative Example 2 |
|---|---|---|---|---|
| Membrane formation condition | Composition of polymer solution | wt% | PVDF1/CTA/CDA/NMP =12/4.0/4.0/80 | PVDF1/CTA/CDA/NMP =12/4.0/4.0/80 |
| | Hydrogen bonding solvent | – | (Not subject) | (Not subject) |
| | Hydrogen bonding polymer | – | CTA, CDA | CTA, CDA |
| | Acceptor number of solvent/donor number of polymer | mol/mol | (Not subject) | (Not subject) |
| | Donor number of solvent/acceptor number of polymer | mol/mol | (Not subject) | (Not subject) |
| | Hydrogen bonding polymer/total polymer | wt% | 40 | 40 |
| | Non-solvent temperature | °C | 25 | 6 |
| Characteristics of porous membrane | Ratio ($H_\alpha/H_\beta$) between α-structure crystals ($H_\alpha$) and β-structure crystals ($H_\beta$) | – | 1.0 | 0.10 |
| | Pure water permeability | $m^3/m^2/h/$ 50 kPa | 0.41 | 0.10 |
| | Removal rate of dextran of 40,000 Da | % | 55 | 70 |
| | Average value of surface pore diameters | nm | 15 | 8.0 |
| | Number of surface pores/average value of surface pore diameters:X | pores/$\mu m^2$/nm | 13 | 9.8 |
| | Presence or absence of nano-network structure | – | Absent | – |
| | Standard deviation of surface pore diameter | nm | 6.0 | 1.9 |
| Evaluation result | Initial ratio of filtration fluxes: F2/F1 | | 0.38 | 0.37 |

[Table 2-2]

| | | | Comparative Example 3 | Comparative Example 4 |
|---|---|---|---|---|
| Membrane formation condition | Composition of polymer solution | wt% | PVDF2/CTA/CDA/NMP =12/4.0/4.0/80 | PVDF3//DMAc/GBL =20/71/9 |
| | Hydrogen bonding solvent | – | (Not subject) | (Not subject) |
| | Hydrogen bonding polymer | – | CTA, CDA | (Not subject) |
| | Acceptor number of solvent/donor number of polymer | mol/mol | (Not subject) | (Not subject) |
| | Donor number of solvent/acceptor number of polymer | mol/mol | (Not subject) | (Not subject) |
| | Hydrogen bonding polymer/total polymer | wt% | 40 | (Not subject) |
| | Non-solvent temperature | ° C | 25 | 21 |
| Characteristics of porous membrane | Ratio ($H_\alpha/H_\beta$) between α-structure crystals ($H_\alpha$) and β-structure crystals ($H_\beta$) | – | 0.22 | 0.63 |
| | Pure water permeability | m³/m²/h/ 50 kPa | 0.21 | 0.022 |
| | Removal rate of dextran of 40,000 Da | % | 57 | 66 |
| | Average value of surface pore diameters | nm | 10 | 15 |
| | Number of surface pores/average value of surface pore diameters:X | pores/μm²/nm | 7.6 | 0.90 |
| | Presence or absence of nano-network structure | – | Absent | – |
| | Standard deviation of surface pore diameter | nm | 4.1 | 8.5 |
| Evaluation result | Initial ratio of filtration fluxes: F2/F1 | | 0.40 | Below measurement lower limit |

[Table 3]

| | | Example 4 | Example 5 | Comparative Example 5 | Comparative Example 6 |
|---|---|---|---|---|---|
| Biopolymer concentration in water to be treated | μgC/L | 122 | 218 | 122 | 218 |
| Biopolymer concentration in water to be fed to reverse osmosis membrane | μgC/L | 35 | 47 | 85 | 139 |
| Pretreatment | – | Ultrafiltration | Ultrafiltration | Ultrafiltration | Ultrafiltration |
| Ultrafiltration membrane | – | Example 1 | Example 1 | Comparative Example 1 | Comparative Example 1 |
| Rate of decrease in water permeability of reverse osmosis membrane | %/hr | 0.15 | 0.18 | 0.25 | 0.45 |
| Water permeability initial value ratio of ultrafiltration membrane | – | 0.71 | 0.63 | 0.53 | 0.45 |

DESCRIPTION OF REFERENCE SIGNS

101: Porous membrane
102: Surface portion
103: Inner portion
201: Coarse contaminant component
202: Fine contaminant component
300: Polymer solution
301: Polymer-rich phase
302: Solvent-rich phase

FL:      Filtration direction
401:    Water to be treated
402:    Reverse osmosis membrane
403:    Permeate water
404:    Concentrated water
405:    Pretreatment step
406:    Water to be fed to reverse osmosis membrane
407:    High-pressure pump
408:    Liquid feeding pump
409:    Feed pump
410:    Cleaning agent
411:    Disinfectant

**Claims**

1.  A porous membrane comprising a polyvinylidene fluoride resin,

    wherein, given that one surface is a surface B and another surface is a surface B, a ratio (ratio of $H_\alpha/H_\beta$) between an $\alpha$-type crystal ($H_\alpha$) and a $\beta$-type crystal ($H_\beta$) in a crystalline portion of the polyvinylidene fluoride resin measured by an attenuated total reflection (ATR) method at the surface A is 0 or more and 0.50 or less, a pure water permeability of the porous membrane is 0.25 $m^3/m^2/h/50$ kPa or more and 1.2 $m^3/m^2/h/50$ kPa or less, and an average value of a surface pore diameter of a surface pore of the surface A of the porous membrane is 5.0 nm or more and 12.0 nm or less.

2.  The porous membrane according to claim 1, wherein the polyvinylidene fluoride resin has a degree of crystallinity of 30% or more at the surface A of the porous membrane.

3.  The porous membrane according to claim 1 or 2, having a removal rate of dextran of 40,000 Da of 45% or more and 80% or less.

4.  The porous membrane according to any one of claims 1 to 3, wherein a value X obtained by dividing a number of the surface pores [pores/$\mu m^2$] at the surface A of the porous membrane by the average value [nm] of the surface pore diameter is 30 pores/$\mu m^2$/nm or more and 100 pores/$\mu m^2$/nm or less.

5.  The porous membrane according to any one of claims 1 to 4, wherein a standard deviation of the surface pore diameter at the surface A of the porous membrane is 1.0 nm or more and 5.0 nm or less.

6.  The porous membrane according to any one of claims 1 to 5, wherein a surface portion from the surface A to a thickness of 10 $\mu$m of the porous membrane is denser than an inner portion.

7.  A liquid filtration method using the porous membrane according to any one of claims 1 to 6.

8.  A membrane filtration apparatus comprising the porous membrane according to any one of claims 1 to 6.

9.  A fresh water generation method comprising:

    a pretreatment step of pretreating water to be treated to provide water to be fed to a reverse osmosis membrane; and
    a reverse osmosis membrane treatment step of filtering the water to be fed to a reverse osmosis membrane with a reverse osmosis membrane to provide permeate water,
    wherein
    the water to be treated is water to be treated having a biopolymer concentration of 100 $\mu$g C/L or more, the water to be fed to a reverse osmosis membrane having a biopolymer concentration reduced to 75 $\mu$g C/L or less by the pretreatment step is provided and supplied to the reverse osmosis membrane treatment step,
    the pretreatment step includes an ultrafiltration membrane treatment section including an ultrafiltration membrane, and
    the ultrafiltration membrane is the porous membrane according to any one of claims 1 to 6.

10. The fresh water generation method according to claim 9, wherein a number of surface pores at the surface A of the porous membrane is 200 pores/$\mu$m$^2$ or more and 2,000 pores/$\mu$m$^2$ or less.

11. The fresh water generation method according to claim 9 or 10, wherein, in the ultrafiltration membrane treatment of the pretreatment step, the water to be treated does not contain a flocculant.

【FIG. 1】

【FIG. 2】

【FIG. 3】

FL

201　202　201　202　201　201

202

102

101

103

202

【FIG. 4】

(a)

300

(b)

301    302

(c)

301    302

(d)

301    302

(e)

301    302

(f)

301    302

【FIG. 5】

【FIG. 6】

## INTERNATIONAL SEARCH REPORT

International application No.

**PCT/JP2023/034640**

### A. CLASSIFICATION OF SUBJECT MATTER

***B01D 61/04***(2006.01)i; ***B01D 61/12***(2006.01)i; ***B01D 61/22***(2006.01)i; ***B01D 61/58***(2006.01)i; ***B01D 63/02***(2006.01)i; ***B01D 65/02***(2006.01)i; ***B01D 69/00***(2006.01)i; ***B01D 69/02***(2006.01)i; ***B01D 69/08***(2006.01)i; ***B01D 71/34***(2006.01)i; ***C02F 1/44***(2023.01)i

FI: B01D63/02; B01D69/00; B01D69/02; B01D61/22; B01D61/04; B01D61/12; B01D61/58; B01D69/08; B01D65/02 520; B01D71/34; C02F1/44 D

According to International Patent Classification (IPC) or to both national classification and IPC

### B. FIELDS SEARCHED

Minimum documentation searched (classification system followed by classification symbols)

B01D61/04; B01D61/12; B01D61/22; B01D61/58; B01D63/02; B01D65/02; B01D69/00; B01D69/02; B01D69/08; B01D71/34; C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-41313 A (ASAHI KASEI CORP) 18 March 2021 (2021-03-18) claims, paragraphs [0036]-[0045], examples | 1-8 |
| Y | | 2-3, 5-6, 9-11 |
| X | JP 2015-73916 A (ASAHI KASEI CHEMICALS CORP) 20 April 2015 (2015-04-20) claims, comparative examples 1, 2 | 1, 3-4, 6-8 |
| Y | | 2-3, 5-6, 9-11 |
| X | US 2019/0126208 A1 (IMPERIAL INNOVATIONS LIMITED) 02 May 2019 (2019-05-02) claims, paragraphs [0104]-[0106], [0115], examples | 1-2, 4, 7-8 |
| Y | | 2-3, 5-6, 9-11 |
| Y | JP 2017-29934 A (KURARAY CO) 09 February 2017 (2017-02-09) claims, examples | 2 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| :--- |
| **PCT/JP2023/034640** |

**C.     DOCUMENTS CONSIDERED TO BE RELEVANT**

| Category* | Citation of document, with indication, where appropriate, of the relevant passages | Relevant to claim No. |
| :---: | :--- | :---: |
| Y | WO 2019/044312 A1 (ORGANO CORPORATION) 07 March 2019 (2019-03-07)<br>claims, paragraphs [0042]-[0046], examples, fig. 2 | 9-11 |

Form PCT/ISA/210 (second sheet) (January 2015)

## INTERNATIONAL SEARCH REPORT
### Information on patent family members

International application No.

**PCT/JP2023/034640**

| Patent document cited in search report | | | Publication date (day/month/year) | Patent family member(s) | | | Publication date (day/month/year) |
|---|---|---|---|---|---|---|---|
| JP | 2021-41313 | A | 18 March 2021 | (Family: none) | | | |
| JP | 2015-73916 | A | 20 April 2015 | (Family: none) | | | |
| US | 2019/0126208 | A1 | 02 May 2019 | WO | 2017/182801 | A1 | |
| | | | | CN | 109310952 | A | |
| JP | 2017-29934 | A | 09 February 2017 | (Family: none) | | | |
| WO | 2019/044312 | A1 | 07 March 2019 | TW | 201920002 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015073916 A
- JP 2021176629 A
- JP 2017029934 A
- JP 6561082 B
- JP 6630689 B

### Non-patent literature cited in the description

- **S. L. MAYO** ; **B. D. OLAFSON** ; **W. A. GODDARD III**. *J. Phys. Chem.*, 1990, vol. 94, 8897
- **J. WANG** ; **R. M. WOLF** ; **J. W. CALDWELL** ; **P. A. KOLLMAN** ; **D. A. CASE**. *J. Comput. Chem.*, 2004, vol. 25, 1157
- **W. L. JORGENSEN** ; **D. S. MAXWELL** ; **JULIAN TIRADO-RIVES**. *J. Am. Chem. Soc.*, 1996, vol. 118, 11225
- **B. R. BROOKS** ; **R. E. BRUCCOLERI** ; **B. D. OLAFSON** ; **D. J. STATES** ; **S. SWAMINATHAN** ; **M. KARPLUS**. *J. Comput. Chem*, 1983, vol. 4, 187
- **HOOVER, W. G.** *Phys. Rev. A*, 1985, vol. 31, 1695
- **H. C. ANDERSEN**. *J. Chem. Phys*, 1980, vol. 72, 2384
- **HUBER, S. A.** ; **BALZ, A.** ; **ABERT, M.** ; **PRONK, W.** Characterisation of aquatic humic and non-humic matter with size-exclusion chromatography e organic carbon detection e organic carbon detection e organic nitrogen detection (LC-OCD-OND). *Water Research*, 2011, vol. 45 (2), 879-885